Europäisches Patentamt

European Patent Office

Office européen des brevets

(11) Numéro de publication: **0 420 712 A1**

# (12) DEMANDE DE BREVET EUROPEEN

(21) Numéro de dépôt: 90402463.5

(22) Date de dépôt: **07.09.90**

(51) Int. Cl.5: **H01C 7/10, C04B 35/00**

(30) Priorité: 08.09.89 FR 8911751

(43) Date de publication de la demande:
**03.04.91 Bulletin 91/14**

(84) Etats contractants désignés:
**AT BE DE FR GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Caffin, Jean-Pierre**
**THOMSON-CSF, SCPI, Cédex 67**
**F-92045 Paris la Défense(FR)**

(74) Mandataire: **Ruellan-Lemonnier, Brigitte et al**
**THOMSON-CSF SCPI**
**F-92045 PARIS LA DEFENSE CEDEX 67(FR)**

(54) Composition à base d'oxyde de zinc pour varistance de basse et moyenne tension.

(57) L'invention concerne une composition à base d'oxyde de zinc pour varistances de basse et moyenne tension et contenant des ajouts d'éléments sous forme d'oxydes, caractérisée en ce que lesdits oxydes sont contenus dans la composition selon les pourcentages pondéraux suivants :

$2,5 \leq Sb_2O_3 \leq 4,5$

$0,8 \leq Co_3O_4 \leq 1$

$0,4 \leq NiO \leq 1$

$0 < Cr_2O_3 \leq 0,8$

$0,6 \leq Mn_3O_4 \leq 0,8$

$4,2 \leq Bi_2O_3 \leq 4,6$

$0,05 \leq PbO \leq 0,15$

$0,001 \leq SiO_2 \leq 0,005$

$0,001 \leq Al_2O_3 \leq 0,002$

$0,04 \leq B_2O_3 \leq 0,07.$

EP 0 420 712 A1

## COMPOSITION A BASE D'OXYDE DE ZINC POUR VARISTANCES DE BASSE ET MOYENNE TENSION

La présente invention se rapporte à des compositions céramiques à base d'oxyde de zinc élaborées particulièrement pour des varistances de basse et moyenne tension.

Une varistance est un composant électrique dans lequel la résistance décroît fortement lorsque la tension, appliquée à ses bornes, augmente. Cette caractéristique remarquable fait que ce composant est utilisé dans des applications de protection contre les surtensions dans les circuits électriques.

On connaît plusieurs types de résistances variant de manière non linéaire en fonction de la tension appliquée à leurs bornes :
- les diodes Zener qui sont utilisées dans l'écrêtage des basses tensions ;
- les varistances à base d'oxyde de zinc ou d'autres oxydes métalliques fabriquées par des techniques céramiques. Ces composants sont d'un coût peu élevé et peuvent être utilisés dans une large gamme de tension (pratiquement de 3 volts à quelques kilovolts).

Les varistances ont été largement utilisées pour stabiliser la tension des circuits électriques ou pour supprimer les surtensions induites dans un circuit.

La caractéristique électrique de telles varistances est exprimée par la relation :

$$I = K \times V^{\alpha}$$

où V est la tension aux bornes de la varistance, I le courant qui la traverse, K une constante dépendant de la géométrie de l'élément varistance et de la technologie utilisée pour l'élaborer et $\alpha$ le coefficient de non-linéarité. L'effet varistance est d'autant plus prononcé que la valeur du coefficient est élevée.

Pour caractériser la non-linéarité de la varistance, on utilise souvent les rapports $V_{1mA}/V_{10\mu A}$ et $V_{10A}/V_{1mA}$, c'est-à-dire les rapports des tensions correspondant respectivement à 1mA, 10$\mu$A, 10A et 1mA. $V_{1mA}/V_{10\mu A}$ caractérise le courant de fuite de la varistance et $V_{10A}/V_{1mA}$ l'écrêtage. Le cas idéal et théorique est celui où ces valeurs sont égales à 1. Dans la pratique, ces rapports sont supérieurs à 1.

Des varistances à base d'oxyde de zinc et contenant des additifs ont déjà été décrites, par exemple dans EP 29 749. Les compositions citées dans EP 29 749 contiennent comme additifs une ou plusieurs combinaisons d'oxydes de bismuth, de cobalt, de manganèse, de bore, d'aluminium, d'argent, de gallium, d'antimoine, de chrome, de nickel et de silicium. Ces compositions présentent généralement un bon coefficient de non-linéarité mais ne permettent pas d'obtenir simultanément :
- une bonne caractéristique courant-tension,
- une bonne tenue aux chocs de courant,
- une grande stabilité des propriétés électriques en chaleur humide même en présence d'enrobage.

La présente invention a pour objet de pallier ces inconvénients, grâce à des compositions de varistances présentant simultanément une bonne non-linéarité ($V_{1mA}/V_{10\mu A} \leq 1,20$ et $V_{10A}/V_{1mA} \leq 1,40$), une bonne tenue aux chocs de courant ($\geq$5000 A/cm$^2$) ainsi qu'une grande stabilité des propriétés électriques lors des tests en chaleur humide (éléments soumis à une température de 40$^\circ$C et à 90 % d'humidité relative, pendant 56 jours).

L'invention a donc pour objet une composition à base d'oxyde de zinc pour varistances de basse et moyenne tension et contenant des ajouts d'éléments sous forme d'oxydes, caractérisée en ce que lesdits oxydes sont contenus dans la composition selon les pourcentages pondéraux suivants :

$2,5 \leq Sb_2O_3 \leq 4,5$

$0,8 \leq Co_3O_4 \leq 1$

$0,4 \leq NiO \leq 1$

$0 < Cr_2O_3 \leq 0,8$

$0,6 \leq Mn_3O_4 \leq 0,8$

$4,2 \leq Bi_2O_3 \leq 4,6$

$0,05 \leq PbO \leq 0,15$

$0,001 \leq SiO_2 \leq 0,005$

$0,001 \leq Al_2O_3 \leq 0,002$

$0,04 \leq B_2O_3 \leq 0,07$.

L'invention a aussi pour objet une varistance pour basse et moyenne tension, caractérisée en ce qu'elle est constituée à partir de la composition décrite ci-dessus.

Selon la présente invention, des compositions à base d'oxyde de zinc pour des varistances de basse et moyenne tension ont été élaborées à partir des oxydes suivants : $ZnO$, $Sb_2O_3$, $Co_3O_4$, $NiO$, $Cr_2O_3$, $Mn_3O_4$, $Bi_2O_3$, $PbO$, $SiO_2$, $Al_2O_3$ et $B_2O_3$.

La demanderesse a effectué de nombreux essais pour découvrir des compositions permettant d'obtenir des varistances présentant simultanément :

- une bonne non-linéarité (c'est-à-dire $V_{1mA}/V_{10\mu A} \leq 1,20$ et $V_{10A}/V_{1mA} \leq 1,40$)
- une bonne tenue aux chocs de courant
- une grande stabilité des propriétés électriques lors des tests en chaleur humide.

On estime que les varistances présentent une stabilité de leurs propriétés électriques suffisante si la variation relative de tension pour un courant de 1mA traversant la varistance ne dépasse pas 5 % après avoir subi le test de chaleur humide.

Il a été découvert que les compositions donnant satisfaction sont celles présentant, outre l'oxyde de zinc ZnO, les oxydes suivants dans les limites indiquées en pourcentages pondéraux :

$2,5 \leq Sb_2O_3 \leq 4,5$

$0,8 \leq Co_3O_4 \leq 1$

$0,4 \leq NiO \leq 1$

$0 < Cr_2O_3 \leq 0,8$

$0,6 \leq Mn_3O_4 \leq 0,8$

$4,2 \leq Bi_2O_3 \leq 4,6$

$0,05 \leq PbO \leq 0,15$

$0,001 \leq SiO_2 \leq 0,005$

$0,001 \leq Al_2O_3 \leq 0,002$

$0,04 \leq B_2O_3 \leq 0,07$.

Il a été constaté que c'est surtout grâce à l'ajustement précis des teneurs en $Al_2O_3$ (entre 10 et 20 ppm) et en $B_2O_3$ (entre 400 et 700 ppm) que des compositions satisfaisantes ont été obtenues.

Il était connu que la présence d'aluminium dans une composition à base d'oxyde de zinc améliore la conductivité électrique de la composition. Cependant, on a découvert en mettant au point la présente invention que le taux d'aluminium dans ces compositions doit être le plus faible possible afin d'avoir un très faible courant de fuite, une bonne tenue aux chocs de courant ainsi qu'un très faible coefficient de température de la tension.

Le coefficient de température k de la tension est généralement défini pour une tension correspondant à un courant de 1mA et d'après la relation :

$$k = \frac{V_1 - V_2}{V_2} \times \frac{1}{\Delta T}$$

V1 étant la tension mesurée aux bornes de la varistance, pour un courant de 1mA et pour 85° C ; V2 étant la tension mesurée aux bornes de la varistance, pour un courant de 1mA et pour 25° C ; $\Delta$ T étant l'écart entre les températures soit 60° C. Le coefficient de température est une valeur négative donnée en % par ° C. Le coefficient de température de la tension sera satisfaisant si sa valeur absolue est inférieure à 0,05 % / ° C .

On a également découvert que la présence de bore permet, simultanément, de diminuer le courant de fuite d'une varistance et d'améliorer la stabilité des propriétés électriques en chaleur humide. Cependant, le taux de $B_2O_3$ ne doit pas être trop élevé pour ne pas détériorer la tenue aux chocs de courant.

Des exemples de compositions vont être donnés ci-dessous. Les mesures des caractéristiques électriques seront effectuées sur des varistances obtenues à partir de masses frittées en forme de plaque rectangulaire, carrée ou circulaire, chaque plaque possédant des électrodes sur ses faces principales, des fils conducteurs contactant ces électrodes par exemple par soudure.

## EXEMPLE I

L'oxyde de zinc, l'oxyde d'antimoine, l'oxyde de cobalt, l'oxyde de nickel, l'oxyde de chrome, l'oxyde de manganèse, l'oxyde d'aluminium et du borosilicate de plomb et de bismuth sont mélangés dans de l'eau désionisée dans les proportions indiquées dans le tableau I placé en fin de description. Chaque composition est séchée puis pressée sous forme de disques de 9 mm de diamètre et de 1,5 mm d'épaisseur. Les pièces sont ensuite dégourdies à 700° C puis frittées à 1200° C. Chaque céramique est par la suite métallisée sur ses deux faces principales avec une couche d'argent déposée par sérigraphie et cuite à 600° C. Une épargne de métallisation de 1 mm est laissée à la périphérie de la pièce. Des connexions sont soudées sur les faces métallisées. Après nettoyage, les pièces sont enrobées avec une résine ou un vernis

3

époxy.

Le tableau I regroupe des compositions référencées C1 à C6 et comprenant en pourcentages pondéraux :

2,71 % de $Sb_2O_3$

0,932 % de $Co_3O_4$

0,869 % de NiO 0,0885 % de $Cr_2O_3$

0,708 % de $Mn_3O_4$

4,5 % de $Bi_2O_3$

0,138 % de PbO

0,003 % de $SiO_2$

0,04 % de $B_2O_3$

et un taux d'$Al_2O_3$ variant dans les limites indiquées. Les caractéristiques électriques exposées dans ce tableau mettent bien en évidence le rôle important joué par l'aluminium, même en très faible quantité, sur les propriétés électriques des varistances.

$V_o$ représente la tension de seuil en V/mm, J la densité de courant en A/cm² et k le coefficient de température de la tension en %/°C.

On constate, à la lecture du tableau I, que pour satisfaire simultanément aux exigences précédemment évoquées, le taux d'$Al_2O_3$ doit être compris entre 0,001 et 0,002 (soit entre 10 et 20 ppm).

Si le taux d'$Al_2O_3$ est inférieur à 0,001 % l'écrêtage est mauvais : $V_{10A}/V_{1mA} > 1,40$.

Si le taux d'$Al_2O_3$ est supérieur à 0,002 % , le courant de fuite est supérieur à 1,20 et la tenue aux chocs de courant de 5000 A/cm² sont mauvais.

On constate aussi que pour les compositions retenues (par exemple C2 et C3), le coefficient de température k est également satisfaisant (inférieur à 0,05 % /°C en valeur absolue.

## EXEMPLE II

Les pièces dont les compositions (C7 à C12) sont reportées dans le tableau II sont élaborées de la même façon que dans l'exemple I.

Le tableau II regroupe des compositions référencées C7 à C12 et comprenant en pourcentages pondéraux :

2,71 % de $Sb_2O_3$

0,9 % de $Co_3O_4$

0,87 % de NiO

0,09 % de $Cr_2O_3$

0,7 % de $Mn_3O_4$

4,6 % de $Bi_2O_3$

0,13 % de PbO

0,003 % de $SiO_2$

0,001% de $Al_2O_3$

et un taux de $B_2O_3$ variant dans les limites indiquées. Les caractéristiques électriques exposées dans ce tableau montrent que le taux de $B_2O_3$ doit être compris entre 0,04 et 0,07 % pour satisfaire simultanément aux exigences précédemment annoncées.

Si le taux de $B_2O_3$ est inférieur à 0,04 % , la dérive de tension de 1mA est supérieure à 5 % .

Si le taux de $B_2O_3$ est supérieur à 0,07 % , la dérive de tension à la tenue aux chocs de courant de 5000 A/cm² est mauvaise.

4

| n° | $Al_2O_3$ | $V_o$ | $\dfrac{V_{1mA}}{V_{10\mu A}}$ | $\dfrac{V_{10A}}{V_{1mA}}$ | J | k |
|---|---|---|---|---|---|---|
| C1 | 0,0004 | 160 | 1,12 | 1,42 | 6000 | -0,02 |
| C2 | 0,001 | 170 | 1,13 | 1,40 | 5500 | -0,025 |
| C3 | 0,002 | 190 | 1,17 | 1,37 | 5000 | -0,03 |
| C4 | 0,003 | 215 | 1,20 | 1,36 | 4500 | -0,04 |
| C5 | 0,004 | 250 | 1,22 | 1,36 | 4700 | -0,046 |
| C6 | 0,005 | 265 | 1,28 | 1,35 | 4500 | -0,052 |

**TABLEAU I**

| n° | $B_2O_3$ | $V_o$ | $\dfrac{V_{1mA}}{V_{10\mu A}}$ | $\dfrac{V_{10A}}{V_{1mA}}$ | J | $\left(\dfrac{\Delta V}{V}\right)_{CH}$ |
|----|----------|-------|-------------------------------|----------------------------|---|------------------------------------------|
| C7  | 0,02 | 170 | 1,26 | 1,39 | 6000 | - 8 % |
| C8  | 0,04 | 175 | 1,20 | 1,39 | 5300 | - 2 % |
| C9  | 0,06 | 165 | 1,15 | 1,40 | 5100 | - 1 % |
| C10 | 0,08 | 170 | 1,13 | 1,40 | 4900 | - 2 % |
| C11 | 0,12 | 180 | 1,11 | 1,40 | 3800 | - 1 % |
| C12 | 0,2  | 195 | 1,09 | 1,42 | 1900 | - 1 % |

**TABLEAU II**

**Revendications**

1 - Composition à base d'oxyde de zinc pour varistances de basse et moyenne tension et contenant des ajouts d'éléments sous forme d'oxydes, caractérisée en ce que lesdits oxydes sont contenus dans la composition selon les pourcentages pondéraux suivants :

$2,5 \leq Sb_2O_3 \leq 4,5$

$0,8 \leq Co_3O_4 \leq 1$

$0,4 \leq NiO \leq 1$

$0 < Cr_2O_3 \leq 0,8$

$0,6 \leq Mn_3O_4 \leq 0,8$

$4,2 \leq Bi_2O_3 \leq 4,6$

$0,05 \leq PbO \leq 0,15$

$0,001 \leq SiO_2 \leq 0,005$

$0,001 \leq Al_2O_3 \leq 0,002$

$0,04 \leq B_2O_3 \leq 0,07.$

2 - Varistance pour basse et moyenne tension, caractérisée en ce qu'elle est constituée à partir d'un composition selon la revendication 1.

**Office européen
des brevets**

**RAPPORT DE RECHERCHE
EUROPEENNE**

Numéro de la demande

**EP 90 40 2463**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | REVUE GENERALE DE L'ELECTRICITE no. 9, octobre 1986, pages 9-18, Paris, F; A. LAGRANGE: "Les varistances à base d'oxyde de zinc: des éléments de protection à l'état solide en plein développement" | 1,2 | H 01 C 7/10 C 04 B 35/00 |
| | — — — | | |
| A | JOURNAL OF MATERIALS SCIENCE LETTERS vol. 4, no. 11, novembre 1985, pages 1305-1307, Londres, GB; Y.L. TSAI et al.: "Improvement of nonlinearity in an ZnO varistor by A1203 doping" | 1,2 | |
| | — — — | | |
| A | EP-A-0 154 184 (GTE LAB. INC.) * revendications 1,2 * | 1,2 | |
| | — — — | | |
| A | US-A-4 719 064 (M. NAKATA et al.) * revendication 1 * | 1,2 | |
| | — — — — — | | |

| DOMAINES TECHNIQUES RECHERCHES (Int. Cl.5) |
|---|
| C 04 B 35/00 H 01 C 7/00 |

Le présent rapport de recherche a été établi pour toutes les revendications

| Lieu de la recherche | Date d'achèvement de la recherche | Examinateur |
|---|---|---|
| Berlin | 13 décembre 90 | KESTEN W.G. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant